# EUROPÄISCHE PATENTSCHRIFT

(11) **EP 3 661 822 B1**
(45) Veröffentlichungstag und Bekanntmachung des Hinweises auf die Patenterteilung: **15.03.2023**
(21) Anmeldenummer: 18746913.5
(22) Anmeldetag: 26.07.2018
(51) Int. Cl.: B60T 13/16, B60T 17/04

(54) **PASSIVES SPEICHERLOSES HYDRAULISCHES BREMSSYSTEM**
PASSIVE ACCUMULATOR-FREE HYDRAULIC BRAKING SYSTEM
SYSTÈME DE FREINAGE HYDRAULIQUE PASSIF SANS STOCKAGE

(30) Priorität: 01.08.2017 DE 102017117422
(43) Veröffentlichungstag der Anmeldung: 10.06.2020
(73) Patentinhaber: KNORR-BREMSE Systeme für Schienenfahrzeuge GmbH, 80809 München (DE)
(72) Erfinder: ELWISCHGER, Fabian, 85399 Halbergmoos (DE); LI, Yuzhi, 82216 Maisach (DE); NIES, Eduard, 82178 Puchheim (DE)
(86) Internationale Anmeldenummer: PCT/EP2018/070309
(87) Internationale Veröffentlichungsnummer: WO 2019/025284

(56) Entgegenhaltungen:
- WO-A1-00/36361
- WO-A1-2017/063678
- DE-A1- 3 603 079
- US-A1- 2013 241 275

## Beschreibung

Die Erfindung betrifft ein passives speicherloses hydraulisches Bremssystem, bei dem eine über einen Motor angetriebene Hydraulikpumpe einen Öldruck erzeugt, der über ein Rückschlagventil eine Druckleitung eines Hydraulikkreis speist, welche mindestens einen hieran angeschlossenen Bremssattel mit einem hydraulischen Speisedruck versorgt.

Das Einsatzgebiet der Erfindung erstreckt sich auf Fahrzeuge, die mit einem passiven speicherlosen hydraulischen Bremssystem ausgestattet sind. Bei einem solchen Bremssystem entfällt ein ansonsten üblicher hydraulischer Druckspeicher, so dass allein der Druck im hydraulischen Leitungssystem zur Aufrechterhaltung der für die Bremsen im nicht betätigten Zustand erforderlichen Lösekraft genutzt wird.

US 2013/241275 A1 offenbart ein hydraulisches Bremssystem mit einem Speicher, bei dem eine über einen Motor angetriebene Hydraulikpumpe einen Öldruck erzeugt, der über ein Rückschlagventil eine Druckleitung eines Hydraulikkreises speist, welche mindestens einen hieran angeschlossenen Bremssattel mit einem hydraulischen Speisedruck versorgt, wobei in der Druckleitung des Hydraulikkreises ein federkraftbeaufschlagtes Dämpfungselement zur Zwischenpufferung eines Leckageauseleich-Ölvolumens aneschlossen ist.

Aus der DE 3 603 079 A1 geht ein hydraulisches speicherloses schlupfgeregeltes Bremssystem hervor, das einen dem Hauptbremszylinder vorgeschalteten Kraftverstärker, eine Hydraulikpumpe mit einem steuerbaren Elektromotor und einen am Eingang der Hydraulikpumpe angeschlossenen Nachlaufbehälter aufweist. Um bei dieser Konfiguration auf eine Behälterwarneinrichtung verzichten zu können, ist die Eingangsleitung der Hydraulikpumpe an einer solchen Stelle am Nachlaufbehälter angeschlossen, deren Lage einem Mindestflüssigkeitsvolumen im Nachlaufbehälter entspricht.

Gemäß des allgemein bekannten Standes der Technik ist die Motor- und Pumpensteuerung speicherloser hydraulischer Bremssysteme derart ausgelegt, dass der stärkste mögliche Krafterzeuger sicher gelöst ist und dies auch bleibt. Dieser Zustand muss bis zur nächsten Bremsanforderung gehalten werden. Eine derartige Auslegung nach dem stärksten Krafterzeuger ist deshalb erforderlich, um ein ungewolltes Anlegen von Bremsbelegen an Bremsscheiben zu verhindern. Hierdurch wird ein Überhitzen der Scheibenbremse vermieden.

Allerdings sind hydraulische Komponenten, wie insbesondere Ventile, nicht absolut dicht. Regelmäßig sind einige Tropfen an Hydrauliköl pro Minute an Leckage pro hydraulischer Komponente zulässig. Durch diese Leckage und dem hieraus resultierenden Volumenverlust fällt allerdings der Druck in der Druckleitung des hydraulischen Kreises und somit im Bremskrafterzeuger. Um diesen Leckageverlust auszugleichen, wird gewöhnlich die Hydraulikpumpe in Betrieb gesetzt. Sind jedoch nur Leckageverluste auszugleichen, so findet dieser Ein- und Ausschaltvorgang der Hydraulikpumpe im sogenannten steifen Bereich des Bremskrafterzeugers statt. Dies hat zur Folge, dass annähernd kein Ölvolumen zum Ausgleich der Leckage zur Verfügung steht.

Mit fortschreitender Betriebsdauer kommt es darüber hinaus noch zur Relaxation von Federelementen im Krafterzeuger, welche maßgeblich für die Bremskrafterzeugerkennlinien verantwortlich sind. Dies hat zur Folge, dass ein bei Inbetriebnahme noch starker Bremskrafterzeuger über die Betriebszeit schwächer wird. Hieraus ergibt sich die Problemstellung, dass ein minimaler leckagebedingter Ölverlust zu einem großen Druckverlust der Druckleitung des Hydraulikkreises führt, was einen häufigen Anlauf der Hydraulikpumpe erforderlich macht. Dies verursacht einen erhöhten Verschleiß, der mit fortschreitender Zeit sogar zum Ausfall der Motor- und Pumpenkombination führen kann.

Da der Entwicklungstrend in jüngster Zeit zu immer kleinvolumigeren Bremskrafterzeugern mit höheren Drücken geht, wird die vorstehend beschriebene Problematik verschärft.

Es ist die Aufgabe der vorliegenden Erfindung, ein passives speicherloses hydraulisches Bremssystem dahingehend weiter zu verbessern, dass hinreichend Öl für einen Leckageausgleich zur Verfügung steht, um die Lebensdauer der Motor- und Pumpenkombination zu erhöhen.

Die Erfindung schließt die technische Lehre ein, dass an der Druckleitung des Hydraulikkreises eines passiven speicherlosen hydraulischen Bremssystems ein federkraftbeaufschlagtes Dämpfungselement zur Zwischenpufferung eines geringen Leckageausgleich-Ölvolumens angeschlossen ist.

Vorzugsweise ist im Dämpfungselement zwischen einem Zylinderkopf und einem federkraftbeaufschlagten Kolben ein Zylinderraum für das Leckageausgleich-Ölvolumen gebildet, welcher 0,3 bis 1 cm³, vorzugsweise zwischen 0,4 bis 0,8 cm³ Öl zwischenpuffert. Weiterhin vorzugsweise sollte die Federstärke des federkraftbeaufschlagten Dämpfungselements derart bemessen sein, dass das Leckageausgleich-Ölvolumen zwischen einem Wiedereinschaltdruck und einem Abschaltdruck des Motors der Hydraulikpumpe zwischengepuffert ist. Hierdurch wird eine lediglich leckagebedingte Inbetriebnahme der Motor- und Pumpenkombination vermieden. Wird beispielsweise die Vorspannkraft des federkraftbeaufschlagten Dämpfungselements auf einen resultierenden Druck von 80 bar justiert, was dem (Wieder-)Einschaltdruck entspricht, kann der Abschaltdruck auf 105 bar festgelegt werden. Das Dämpfungselement kann mit einem internen Anschlag bei ca. 110 bar dimensioniert werden. Daraus resultiert, dass der steife Bereich der Kennlinie des Bremskrafterzeugers abgedämpft wird. Je nach Toleranzlage reicht eine Zwischenpufferung von den vorstehend erwähnten vorzugsweise 0,4 cm³ bis 0,8 cm³ aus. Bei einer Leckage des Bremssystems wird nun zuerst dieses zwischengepufferte Öl verwendet, bevor die Motor- und Pumpenkombination erneut anlaufen muss.

Gemäß einer bevorzugten Ausführungsform ist das federkraftbeaufschlagte Dämpfungselement hinsichtlich der auf den Hydraulikkreis aufbringbaren Federstärke einstellbar ausgebildet. Hierdurch kann in einfacher Weise eine systembezogene Justierung der Vorspannkraft erreicht werden.

Gemäß eines bevorzugten Ausführungsbeispiels eines federkraftbeaufschlagten Dämpfungselements wird vorgeschlagen, zur Federbeaufschlagung ein Tellerfederpaket vorzusehen, das an einem axial in einem Dämpfungselementgehäuse dynamisch abgedichtet bewegbar untergebrachten Kolben an der dem Hydraulikdruck gegenüberliegenden Seite zur Anlage kommt. Wie bereits erwähnt bildet der Kolben gemeinsam mit dem Zylinderkopf eine Kolben-Zylinder-Anordnung, welche einerseits federkraftbeaufschlagt und andererseits druckbeaufschlagt ist. Hierüber wird die Dämpfungsfunktion des Dämpfungselements erzielt. Das Tellerfederpaket besteht aus einer Mehrzahl einzelner Tellerfedern, welche in paketartiger Aneinanderreihung eine auf dem herrschenden Hydraulikdruck abgestimmte Federkraft bei hinreichendem Kolbenhub erzeugen können.

Vorzugsweise ist der Zylinderkopf der Kolben-Zylinder-Anordnung in ein topfförmig ausgebildetes Dämpfungselementgehäuse eingeschraubt, um eine kompakte Baueinheit zu bilden, welche einfach montierbar ist. Die Schraubverbindung bietet den weiteren Vorteil, dass über die Einschraubtiefe des Zylinderkopfes in das topfförmige Dämpfungselementgehäuse die Federstärke des Tellerfederpakets hinsichtlich ihrer Vorspannung einstellbar ist. Natürlich ist es auch möglich, einen Zylinderkopf auf ein Dämpfungselementgehäuse aufzuschrauben statt einzuschrauben.

Gemäß einer weiteren die Erfindung verbessernden Maßnahme wird vorgeschlagen, die Auf- oder Einschraubtiefe des Zylinderkopfs in bzw. am Dämpfungselementgehäuse mittels eines lösbaren Sicherungselements zu sichern. Dies kann beispielsweise eine Sicherungsschraube sein, welche eine Klemmwirkung auf die Schraubverbindung ausübt.

Vorteilhafterweise sollte direkt in den Zylinderkopf eine koaxiale Anschlussbohrung zum Anschluss an die Druckleitung des Hydraulikkreises eingebracht werden. Hierdurch lässt sich das Dämpfungselement direkt an einen Anschlussstutzen der Druckleitung anbringen, vorzugsweise über ein Anschlussgewinde. Daneben ist es auch denkbar, das federbeaufschlagte Dämpfungselement in den Tankbereich eines speicherlosen Hydrogeräts direkt zu integrieren.

Gemäß einer anderen die Erfindung verbessernden Maßnahme wird vorgeschlagen, dass der Kolben einen rückwärtigen Führungsschaftabschnitt aufweist, welcher durch eine zentrale Ausnehmung des Tellerfederpakets hindurch verläuft, um seitens des distalen Endes in eine Führungsgrundbohrung im Bodenbereich des topfförmigen Dämpfungselements einzugreifen. Hierüber wird der Kolben entlang seiner axialen Hubbewegung zuverlässig geführt. Denn die Führung erfolgt seitens des proximalen Endes des Kolbens im Zylinderkopf und seitens des distalen Endes des Kolbens über die Führungsgrundbohrung direkt im Dämpfungselementgehäuse.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine schematische Schaltbilddarstellung eines passiven speicherlosen hydraulischen Bremssystems, und
- Fig. 2: einen Längsschnitt durch ein federkraftbeaufschlagtes Dämpfungselement zur Zwischenpufferung eines Leckageausgleich-Ölvolumens.

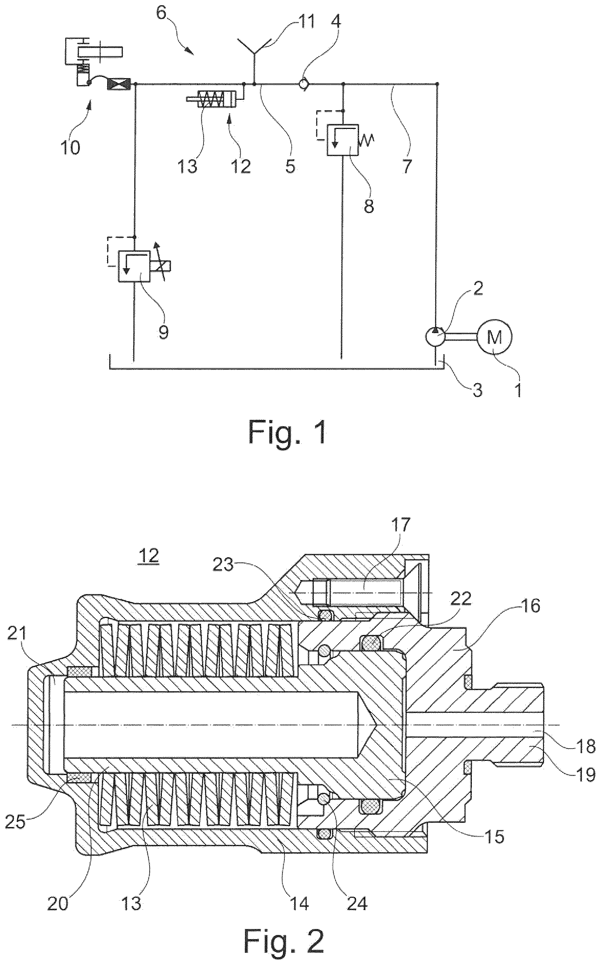

Nach Figur 1 übernimmt eine über einen elektrischen Motor 1 angetriebene Hydraulikpumpe 2 aus einem Tank 3 Öl als Hydraulikflüssigkeit und führt diese über ein Rückschlagventil 4 einer Druckleitung 5 eines Hydraulikkreises 6 zu. Um aus Sicherheitsgründen einen Höchstdruck bei dieser Hydraulikdruckspeisung nicht zu überschreiten, zweigt von einer Speiseleitung 7 vor dem Rückschlagventil 4 ein Druckbegrenzungsventil 8 ab, welches auslassseitig in den Tank 3 einmündet. Das Druckbegrenzungsventil 8 ist hinsichtlich seines Öffnungsdrucks auf den definierten Höchstdruck eingestellt.

Die Druckleitung 5 führt an ein Regelventil 9, das als Höchstdruckventil fungierend den Druck in der Druckleitung 5 des Hydraulikkreises 6 einstellt. Auslassseitig ist das Regelventil 9 ebenfalls mit dem Tank 3 verbunden. Das Regelventil 9 ist hinsichtlich der Höchstdruckschwelle, ab welcher eine Abführung von Überdruck in den Tank 3 erfolgt, einstellbar.

Weiterhin ist an die Druckleitung 5 ein Bremssattel 10, welcher durch den in der Druckleitung herrschenden Druck betätigbar ist. Die Druckleitung 5 wird von einem Druckgeber 11 überwacht.

Um zwecks Leckageausgleich im Bereich der Druckleitung 5 des Hydraulikkreises 6 eine Zwischenpufferung eines geringfügigen Ölvolumens von maximal 1 cm³ vorzunehmen, ist an die Druckleitung 5 des Hydraulikkreises 6 außerdem ein federbeaufschlagtes Dämpfungselement 12 angeschlossen.

Durch ein im federbeaufschlagten Dämpfungselement 12 integriertes Tellerfederpaket 13 ist die Federstärke derart bemessen, dass das Leckageausgleich-Ölvolumen zwischen einem Wiedereinschaltdruck und Abschaltdruck des Motors 1 für die Hydraulikpumpe 2 zwischengepuffert ist.

Nach Fig. 2 ist das Tellerfederpaket 13 des Dämpfungselements 12 derart in einem Dämpfungselementgehäuse 14 untergebracht, dass dieses sich einerseits bodenseitig des Dämpfungselementgehäuses 14 abstützt und andererseits an einem dynamisch abgedichtet axial bewegbar im Dämpfungselementgehäuse 14 untergebrachten Kolben 15 zur Anlage kommt. An der dem Tellerfederpaket 13 gegenüberliegenden Stirnseite des Kolbens 15 wirkt dieser auf den Öldruck ein. Der Kolben 15 ist dynamisch abgedichtet axial bewegbar innerhalb eines Zylinderkopfes 16 geführt. Der Zylinderkopf 16 ist in das topfförmige Dämpfungselementgehäuse 14 eingeschraubt. Die Einschraubtiefe des Zylinderkopfes 16 ist variabel, so dass sich hierdurch die Vorspannung des Tellerfederpakets 13 einstellen lässt. Zur Fixierung der gewählten Einschraubtiefe ist in das Dämpfungselementgehäuse 14 achsparallel zu dessen Längsstreckung ein als Senkkopfschraube ausgebildetes lösbares Sicherungselement 17 eingeschraubt. Der Schraubenkopf des Sicherungselements 17 kommt an den Randbereich des Zylinderkopfes 16 klemmend zur Anlage.

Der Zylinderkopf 16 weist weiterhin eine koaxiale Anschlussbohrung 18 auf, worüber ein Anschluss an die Druckleitung 5 des Hydraulikkreises 6 erfolgt. Hierzu ist an dem Zylinderkopf 16 ein Gewindezapfen 19 angeformt, mit welchem eine lösbare Verbindung zu einer - hier nicht weiter dargestellten - korrespondierenden Gewindeanschlussöffnung an der Druckleitung 5 herstellbar ist.

Der Kolben 15 weist einen rückwärtigen Führungsschaftabschnitt 20 auf. Der Führungsschaftabschnitt 20 verläuft durch eine zentrale Ausnehmung des Tellerfederpakets 13 hindurch. Zwischen dieser Ausnehmung des Tellerfederpakets 13 und dem Führungsschaftabschnitt 20 besteht eine Spielpassung. Seitens des distalen Endes mündet der Führungsschaftabschnitt 20 in eine Führungsgrundbohrung 21 im Bodenbereich des topfförmigen Dämpfungselementgehäuses 14 ein. Somit erfolgt eine Führung des Kolbens 15 einerseits seitens des Zylinderkopfes 16 und andererseits seitens des Bodenbereichs des topfförmigen Dämpfungselementgehäuses 14.

Die Kolben-Zylinder-Anordnung des Dämpfungselements kann auch konstruktiv anders gelöst sein, beispielsweise auch ohne die Nutzung einer variablen Einschraubtiefe des Zylinderkopfs für die Einstellung der Vorspannung der Federstärke. Es ist auch möglich, dass der Zylinderkopf nicht in das Dämpfungselementgehäuse eingeschraubt wird, sondern an dessen Außenwandung angeschraubt wird.

Das federkraftbeaufschlagte Dämpfungselement 12 ist ferner mit diversen Dichtringen ausgestattet, umfassend einen dynamischen Kolbendichtring 22 sowie einen statischen Gehäusedichtring 23. Ferner ist zur Hubbegrenzung im Zylinderkopf 16 ein Anschlagring 24 eingesetzt und die bodenseitige Führung des Führungsschaftabschnitts 20 des Kolbens 15 ist mit einem Gleitführungsring 25 versehen.

### Bezugszeichenliste

- 1: Motor
- 2: Hydraulikpumpe
- 3: Tank
- 4: Rückschlagventil
- 5: Druckleitung
- 6: Hydraulikkreis
- 7: Speiseleitung
- 8: Druckbegrenzungsventil
- 9: Regelventil
- 10: Bremssattel
- 11: Druckgeber
- 12: Dämpfungselement
- 13: Tellerfederpaket
- 14: Dämpfungselementgehäuse
- 15: Kolben
- 16: Zylinderkopf
- 17: Sicherungselement
- 18: Anschlussbohrung
- 19: Anschlussstutzen
- 20: Führungsschaftabschnitt
- 21: Führungsgrundbohrung
- 22: Kolbendichtring
- 23: Gehäusedichtring
- 24: Anschlagring
- 25: Gleitführungsring

## Patentansprüche

1. Passives speicherloses hydraulisches Bremssystem, bei dem eine über einen Motor (1) angetriebene Hydraulikpumpe (2) einen Öldruck erzeugt, der über ein Rückschlagventil (4) eine Druckleitung (5) eines Hydraulikkreises (6) speist, welche mindestens einen hieran angeschlossenen Bremssattel (10) mit einem hydraulischen Speisedruck versorgt,
**dadurch gekennzeichnet, dass** an der Druckleitung (5) des Hydraulikkreises (6) ein federkraftbeaufschlagtes Dämpfungselement (12) zur Zwischenpufferung eines Leckageausgleich-Ölvolumens angeschlossen ist.

2. Passives speicherloses hydraulisches Bremssystem nach Anspruch 1,
**dadurch gekennzeichnet, dass** die Federkraft des Dämpfungselements (6) und/oder das diesem zugeordnete Volumen einstellbar ausgebildet ist und derart bemessen ist, dass das Leckageausgleich-Ölvolumen zwischen einem Wiedereinschaltdruck und Abschaltdruck des Motors (1) für die Hydraulikpumpe (2) zwischengepuffert ist.

3. Passives speicherloses hydraulisches Bremssystem nach Anspruch 1 oder 2,
**dadurch gekennzeichnet, dass** das federkraftbeaufschlagte Dämpfungselement (12) hinsichtlich der auf den Hydraulikkreis (6) aufbringbaren Federkraft einstellbar ausgebildet ist.

4. Passives speicherloses hydraulisches Bremssystem nach einem der Ansprüche 1 bis 3,
**dadurch gekennzeichnet, dass** zur Federkraftbeaufschlagung des Dämpfungselements (12) ein Tellerfederpaket (13) vorgesehen ist, das an einem axial in einem Dämpfungselementgehäuse (14) dynamisch abgedichtet bewegbar untergebrachten Kolben (15) an der dem Hydraulikdruck gegenüberliegenden Seite zur Anlage kommt.

5. Passives speicherloses hydraulisches Bremssystem nach Anspruch 4,
**dadurch gekennzeichnet, dass** ein Zylinderkopf (16) in das topfförmige Dämpfungselementgehäuse (14) eingeschraubt ist und dynamisch abgedichtet mit dem Kolben (15) zusammenwirkt, wobei die Einschraubtiefe des Zylinderkopfs (16) die Federkraft des Tellerfederpakets (13) bestimmt.

6. Passives speicherloses hydraulisches Bremssystem nach Anspruch 5,
**dadurch gekennzeichnet, dass** die Einschraubtiefe des Zylinderkopfes (16) im Dämpfungselementgehäuse (14) mittels eines lösbaren Sicherungselements (17) gesichert ist.

7. Passives speicherloses hydraulisches Bremssystem nach Anspruch 5,
**dadurch gekennzeichnet, dass** in den Zylinderkopf (16) eine koaxiale Anschlussbohrung (18) zum Anschluss an die Druckleitung (5) des Hydraulikkreises (6) angeordnet ist.

8. Passives speicherloses hydraulisches Bremssystem nach Anspruch 4,
**dadurch gekennzeichnet, dass** der Kolben (15) einen rückwärtigen Führungsschaftabschnitt (20) aufweist, der durch eine zentrale Ausnehmung des Tellerfederpakets (13) hindurch verläuft und seitens des distalen Endes in einer Führungsgrundbohrung (21) im Bodenbereich des topfförmigen Dämpfungselementgehäuses (14) geführt ist.

9. Passives speicherloses hydraulisches Bremssystem nach einem der vorstehenden Ansprüche,
**dadurch gekennzeichnet, dass** der zwischen Zylinderkopf (16) und Kolben (15) gebildete Zylinderraum ein Leckageausgleich-Ölvolumen zwischen 0,3 bis 1 cm³, vorzugsweise zwischen 0,4 bis 0,8 cm³ Öl zwischenpuffert.

10. Passives speicherloses hydraulisches Bremssystem nach einem der vorstehenden Ansprüche,
**dadurch gekennzeichnet, dass** das federkraftbeaufschlagte Dämpfungselement (12) in den Tankbereich eines speicherlosen Hydrogeräts integriert ist.

## Claims

1. Passive accumulator-free hydraulic braking system, in which a hydraulic pump (2) driven via a motor (1) generates an oil pressure which feeds, via a non-return valve (4), a pressure line (5) of a hydraulic circuit (6), which pressure line (5) supplies at least one brake calliper (10) connected thereto with a hydraulic feed pressure,
**characterised in that** a spring-loaded damping element (12) is connected to the pressure line (5) of the hydraulic circuit (6) for the intermediate buffering of a leakage compensation oil volume.

2. Passive accumulator-free hydraulic braking system according to claim 1,
**characterised in that** the spring force of the damping element (6) and/or the volume assigned thereto are/is designed to be adjustable and dimensioned such that the leakage compensation oil volume is intermediate-buffered between a restarting pressure and a shutdown pressure of the motor (1) for the hydraulic pump (2).

3. Passive accumulator-free hydraulic braking system according to claim 1 or 2,
**characterised in that** the spring-loaded damping element (12) is designed to be adjustable in respect of the spring force which can be applied to the hydraulic circuit (6).

4. Passive accumulator-free hydraulic braking system according to any of claims 1 to 3,
**characterised in that,** for applying spring force to the damping element (12), a Belleville spring package (13) is provided, which comes to bear against a piston (15) axially movably accommodated with dynamic sealing in a damping element housing (14) on the side opposite the hydraulic pressure.

5. Passive accumulator-free hydraulic braking system according to claim 4,
**characterised in that** a cylinder head (16) is screwed into the pot-shaped damping element housing (14) and interacts with the piston (15) under dynamic sealing, wherein the screw-in depth of the cylinder head (16) determines the spring force of the Belleville spring package (13).

6. Passive accumulator-free hydraulic braking system according to claim 5,
**characterised in that** the screw-in depth of the cylinder head (16) in the damping element housing (14) is secured by means of a releasable securing element (17).

7. Passive accumulator-free hydraulic braking system according to claim 5,
**characterised in that** a coaxial connecting bore (18) is provided in the cylinder head (16) for connection to the pressure line (5) of the hydraulic circuit (6).

8. Passive accumulator-free hydraulic braking system according to claim 4,
**characterised in that** the piston (15) has a rear guide shank section (20), which extends through a central recess of the Belleville spring package (13) and is guided on the side of the distal end in a guide base bore (21) in the base region of the pot-shaped damping element housing (14).

9. Passive accumulator-free hydraulic braking system according to any of the preceding claims,
**characterised in that** the cylinder chamber formed between cylinder head (16) and piston (15) intermediate-buffers a leakage compensation oil volume between 0.1 and 1 cm³, preferably between 0.5 and 0.8 cm³ oil.

10. Passive accumulator-free hydraulic braking system according to any of the preceding claims,
**characterised in that** the spring-loaded damping element (12) is integrated into the tank region of an accumulator-free hydraulic unit.

## Revendications

1. Système de freinage hydraulique passif sans stockage, dans lequel une pompe (2) hydraulique, entraînée par un moteur (1), produit une pression d'huile qui, par un clapet (4) antiretour, alimente un conduit (5) de pression d'un circuit (6) hydraulique, qui soumet à une pression d'alimentation hydraulique au moins étrier (10) de frein, qui y est raccordé,
**caractérisé en ce qu'au** conduit (5) de pression du circuit (6) hydraulique est raccordé un élément (12) d'amortissement soumis à une force de ressort pour le tamponnage intermédiaire d'un volume d'huile de compensation de fuite.

2. Système de freinage hydraulique passif sans stockage suivant la revendication 1,
**caractérisé en ce que** la force de ressort de l'élément (6) d'amortissement et/ou le volume associé à celui-ci est réglable et est tel que le volume d'huile de compensation de fuite est tamponné intermédiairement, entre une pression de remise en circuit et une pression d'arrêt du moteur (1) de la pompe (2) hydraulique.

3. Système de freinage hydraulique passif sans stockage suivant la revendication 1 ou 2,
**caractérisé en ce que** l'élément (12) d'amortissement soumis à l'action d'un ressort est constitué réglable en ce qui concerne la force de ressort pouvant être appliquée au circuit (6) hydraulique.

4. Système de freinage hydraulique passif sans stockage suivant la revendication 1 à 3,
**caractérisé en ce qu'**il est prévu, pour l'application de la force de ressort de l'élément (12) d'amortissement, un paquet (13) de ressorts à disque, qui vient en contact, du côté opposé à la pression hydraulique, avec un piston (15), logé de manière mobile, avec étanchéité dynamiquement, axialement dans un boîtier (14) de l'élément d'amortissement.

5. Système de freinage hydraulique passif sans stockage suivant la revendication 4,
**caractérisé en ce qu'**une tête (16) cylindrique est vissée dans le boîtier (14) de l'élément d'amortissement en forme de pot et coopère, d'une manière étanche dynamiquement, avec le piston (15), la profondeur de vissage de la tête (16) cylindrique déterminant la force de ressort du paquet (13) de ressorts à disque.

6. Système de freinage hydraulique passif sans stockage suivant la revendication 5,
**caractérisé en ce que** la profondeur de vissage de la tête (16) cylindrique dans le boîtier (14) de l'élément d'amortissement est assurée au moyen d'un élément (17) d'arrêt amovible.

7. Système de freinage hydraulique passif sans stockage suivant la revendication 5,
**caractérisé en ce que,** dans la tête (16) cylindrique est prévu un trou (18) coaxial de raccordement, pour le raccordement au conduit (5) de pression du circuit (6) hydraulique.

8. Système de freinage hydraulique passif sans stockage suivant la revendication 4,
**caractérisé en ce que** le piston (15) a une partie (20) de fût de guidage vers l'arrière, qui passe dans un évidement central du paquet (13) de ressorts à disque, et qui est guidé, du côté de l'extrémité distale, dans un trou (21) de base de guidage dans la partie de fond du boîtier (14) en forme de pot de l'élément d'amortissement.

9. Système de freinage hydraulique passif sans stockage suivant l'une des revendications précédentes,
**caractérisé en ce que** l'espace cylindrique formé entre la tête (16) cylindrique et le piston (15) tamponne un volume d'huile de compensation de fuite compris entre 0,3 et 1 cm³, de préférence entre 0,4 à 0,8 cm³ d'huile.

10. Système de freinage hydraulique passif sans stockage suivant l'une des revendications précédentes,
**caractérisé en ce que** l'élément (12) d'amortissement soumis à l'action de ressort est intégré dans la partie de réservoir d'un appareil hydraulique sans stockage.
